# EUROPEAN PATENT APPLICATION

(11) **EP 2 721 972 A1**
(43) Date of publication of application: **23.04.2014**
(21) Application number: 12189480.2
(22) Date of filing: 22.10.2012
(51) Int. Cl.: A47J 31/40

(54) **Milk powder dispenser**

(71) Applicant: Piena Inc., Seoul 135-080 (KR)
(72) Inventor: Kang, Mi Seon, Seoul 138-912 (KR)
(74) Representative: O'Neill, Michelle

(57) **Abstract**

The inventive concept relates to a milk powder dispenser (10). The milk powder dispenser (10) may include a housing (100); a milk powder container (500) that can be detached from the housing (100); a water bucket (200)located at an interior space of the housing (100) and provided to one surface of the housing (100); and a heating member (300) of which an operation is automatically stopped after heating water in the water bucket to a specific temperature, the heating member (300) being located at the interior space of the housing (100) so that it is adjacent to the water bucket (200).

## Description

### BACKGROUND

The present inventive concept herein relates to milk powder dispensers, and more particularly, to a milk powder dispenser that can simply make baby food.

A newborn baby has a certain period of lactation after birth. At this time, mother's milk may be given to a newborn baby but baby food that a milk powder is mixed with water is often given to a newborn baby.

To make baby food, a process of mixing cooled, boiled water with the right amount of milk powder. Since feeding has to be done to a newborn baby several times every day, it is very inconvenience to repeat a process of making milk every time. Also, since water being used in feeding has to be cooled to an optimal temperature after bringing to a boil, much time is spent to bring water to a boil and cool the water.

### SUMMARY

Embodiments of the inventive concept provide a milk powder dispenser. The milk powder dispenser may include a housing; a milk powder container that can be detached from the housing; a water bucket located at an interior space of the housing and provided to one surface of the housing; and a heating member of which an operation is automatically stopped after heating water in the water bucket to a specific temperature, the heating member being located at the interior space of the housing so that it is adjacent to the water bucket.

### BRIEF DESCRIPTION OF THE FIGURES

Preferred embodiments of the inventive concept will be described below in more detail with reference to the accompanying drawings. The embodiments of the inventive concept may, however, be embodied in different forms and should not be constructed as limited to the embodiments set forth herein. Rather, these embodiments are provided so that this disclosure will be thorough and complete, and will fully convey the scope of the inventive concept to those skilled in the art. Like numbers refer to like elements throughout.

FIG. 1 is a perspective view of milk powder dispenser in accordance with some embodiments of the inventive concept.

FIG. 2 is a drawing of a state that a milk powder container is separated from the milk powder dispenser of FIG. 1.

FIG. 3 is a drawing illustrating a structure of the milk powder dispenser of FIG. 1.

FIG. 4 is a drawing illustrating a power supply sensor unit in accordance with some embodiments of the inventive concept.

FIG. 5 is a drawing illustrating a connection relation of a control part.

FIG. 6 is a perspective view of the disaggregated milk powder container.

FIG. 7 is a drawing illustrating a process that a milk powder is discharged from a discharge quantity control part.

FIG. 8 is a drawing illustrating a process that a milk powder is discharged from another discharge quantity control part.

FIG. 9 is a perspective view illustrating a state that an internal container is combined with a first rotating member.

FIG. 10 is a perspective view illustrating a state that an external container is combined with a first rotating member.

FIG. 11 is a drawing illustrating a first rotating member in which a rotation begins.

FIG. 12 is a drawing illustrating a first rotating member in which a rotation is over.

FIG. 13 is a drawing illustrating a rotating control member in which a rotation begins.

FIG. 14 is a drawing illustrating a rotating control member in which a rotation is over.

### DETAILED DESCRIPTION OF THE EMBODIMENTS

Embodiments of inventive concepts will be described more fully hereinafter with reference to the accompanying drawings, in which embodiments of the invention are shown. This inventive concept may, however, be embodied in many different forms and should not be construed as limited to the embodiments set forth herein. Rather, these embodiments are provided so that this disclosure will be thorough and complete, and will fully convey the scope of the inventive concept to those skilled in the art. In the drawings, the size and relative sizes of layers and regions may be exaggerated for clarity. Like numbers refer to like elements throughout.

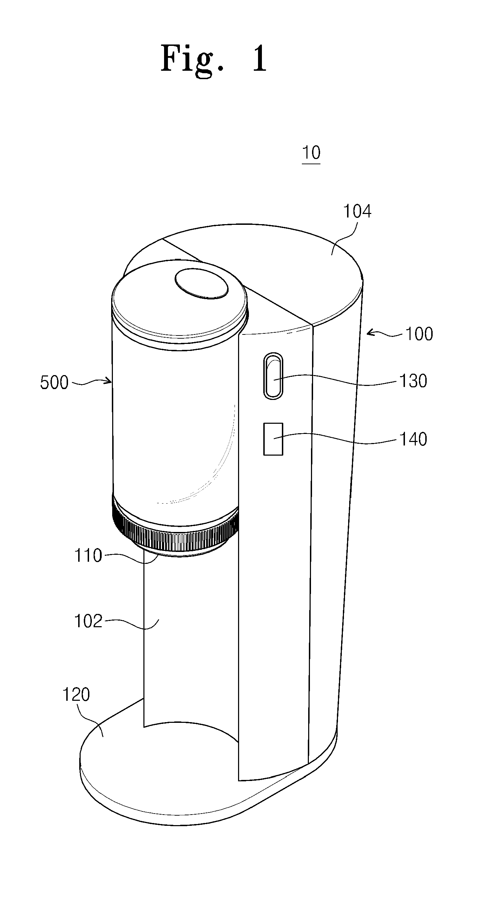

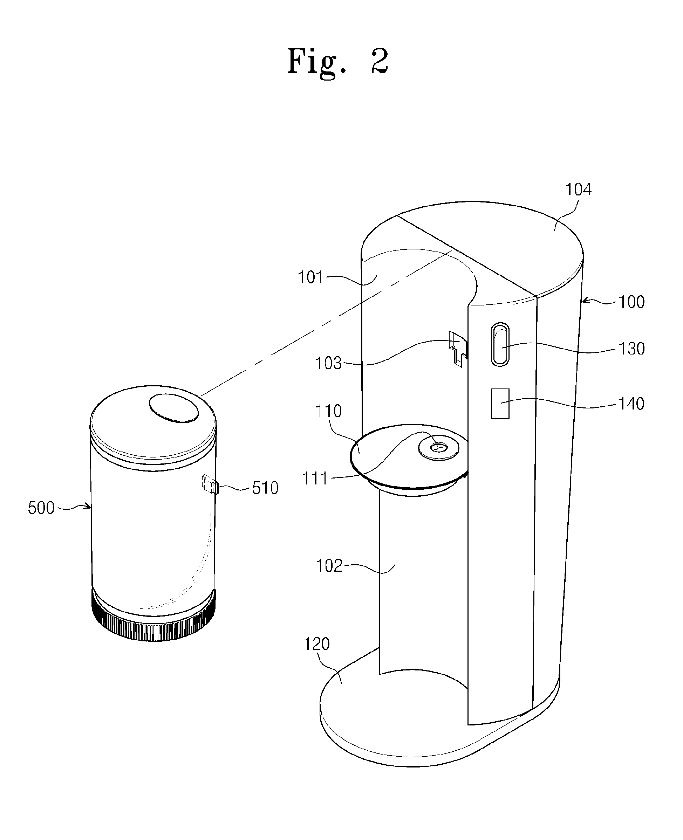

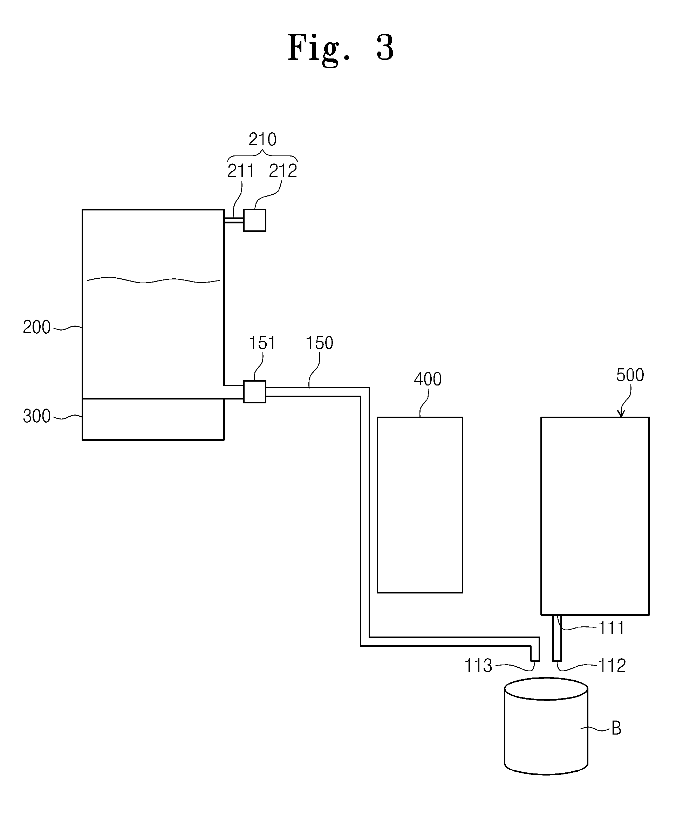

FIG. 1 is a perspective view of milk powder dispenser in accordance with some embodiments of the inventive concept. FIG. 2 is a drawing of a state that a milk powder container is separated from the milk powder dispenser of FIG. 1. FIG. 3 is a drawing illustrating a structure of the milk powder dispenser of FIG. 1.

Referring to FIGS. 1, 2 and 3, the milk powder dispenser 10 includes a housing 100, a bucket 200, a heating member 300, a cooling member 400 and a milk powder container 500.

The housing 100 forms an appearance and a frame of the milk powder dispenser 10. A shape of the housing 100 may be a polygonal pillar or a cylinder. A combination part 101 and a receipt part 102 are formed on a side of the housing 100. The combination part 101 may be formed to be a groove formed long up and down. The top of the combination part 101 can extend to a top surface of the housing 100. The combination part 101 has a shape corresponding to a side of the milk powder container 500. For instance, when the milk powder container 500 has a shape of cylinder, the combination part 101 may be formed to be a groove of which a shape viewed from above is a circular arc. The receipt plate 110 is located under the combination part 101. A top surface of the receipt plate 110 may have a shape corresponding to a bottom surface of the milk powder container 500. The milk powder container 500 is located at a place in which it can be attached to and detached from the receipt plate 110 and the combination part101. A combination member 510 may be provided on a side of the milk powder container 500. In the combination part 101, an insertion hole 103 may be formed at a position corresponding to the combination member 510. If the milk powder container 500 is located on the receipt plate 110, the combination member 510 is inserted into the insertion hole 103 to fix the milk powder container 500 to the housing 100. A milk powder inlet 111 is formed on a top surface of the receipt plate 110. A milk powder being discharged from the milk powder container 500 flows in the milk powder inlet 111. A milk powder outlet 112 and a water outlet 113 may be formed on a bottom surface of the receipt plate 110. The milk powder outlet 112 is connected to the milk powder inlet 111, so that a milk powder flowed into the milk powder inlet 111 is discharged. The milk powder inlet 111 and the milk powder outlet 112 may be both ends of the hole formed in the receipt plate 110. The water outlet 113 is connected to the water bucket 200 through a flow tube 150, so that water in the bucket 200 is discharged. A receipt part 102 is formed under the receipt plate 110. The receipt part 102 may be formed long up and down. The water outlet 113 may be formed on an external surface of the housing 100. A part of the flow tube 150 may be provided to be exposed toward the receipt part 102. Thus, water discharged from the water outlet 113 located at the end of the flow tube 150 may be provided to a place adjacent to a milk powder discharged from the milk powder outlet 112. The receipt part 102 makes a milk bottle B be located under the milk powder outlet 112 and the water outlet 113. A supporting part 120 may be formed under the receipt part 102. The supporting part 120 forms the bottom of the housing 100. The supporting part 120 may be formed to have an area greater than the top surface of the housing 100. A top surface of the supporting part 120 may be formed to be exposed toward the receipt part 102. A user can place the milk bottle B on the top surface of the supporting part 120 and thereby the milk bottle B can be located under the water outlet 113 and the milk powder outlet 112. A switch 130 and a temperature measuring sensor 140 are located at the housing 100. The switch 130 is provided to be exposed to one surface of the housing 100. A user can push the switch 130 to operate the milk powder dispenser 10. The temperature measuring sensor 140 is attached to the housing 100 to sense an external temperature. The temperature measuring sensor 140 may be provided to be located on an external surface of the housing 100. Also, the temperature measuring sensor 140 may be provided not to be exposed to the external surface of the housing 100.

The housing 100 forms an interior space. The bucket 200, the heating member 300 and the cooling member 400 are compactly built in the interior space. Thus, since the milk powder dispenser 10 is not great in volume, it can be easily installed in a narrow space.

The bucket 200 opens and shuts through a cover 104 provided onto one surface of the housing 100. A user can open the cover 104 to supply water to the bucket 200. A temperature sensor unit 210 is located at one side of the bucket 200. The temperature sensor unit 210 includes a steam hole 211 and a temperature sensor 212. The temperature sensor unit 210 sensors whether water in the bucket 200 is heated to desired temperature. The steam hole 211 may be located at an upper portion of the bucket 200. Thus, the steam hole 211 may be located above the surface of the water accommodated in the bucket 200. Steam generated from boiling water in the bucket 200 is supplied to the temperature sensor 212 through the steam hole 211. The temperature sensor 212 can sense whether the water is heated to a desired temperature through the steam. The temperature sensor 212 may be provided to be a bimetal. If steam is supplied to the bimetal, the bimetal can sense a temperature of the water accommodated in the bucket 200 while a shape of the bimetal is modified. The bucket 200 may be formed of stainless steel so that it can be rapidly heated by the heating member 300 and is sanitary. The bucket 200 may be provided to have the small capacity of 200ml- 400ml. Thus, the water accommodated in the bucket 200 can be heated in a short time of 30 seconds and the bucket 200 can be miniaturized. The right amount of sterilized water can be made which is needed to make baby food for a feeding.

In some other embodiments, the steam hole 211 may be omitted in the temperature sensor unit 210. Thus, the temperature sensor unit 210 can be directly located on a tope surface of the bucket 200.

The heating member 300 is disposed to be adjacent to the bucket 200. The heating member 200 may be disposed to contact a side surface or a bottom surface of the bucket 200. The heating member 300 heats water accommodated in the bucket 200. The heating member 300 may have a nicrome heat wire that can heat water at high speed. Water in the small capacity bucket 200 can be rapidly heated to a temperature of 100 °C in 10 seconds through 30 seconds by the heating member 300. If pushing the switch 130, the heating member 300 operates. An operation of the heating member 300 is stopped according to a temperature of water sensed by the temperature sensor 212. A bimetal may function as a switch of power supply being supplied to the heating member 300. When the heating member 300 operates, a bimetal is not modified and thereby power supply is supplied to the heating member 300. If water is heated above a specific temperature to modify the bimetal, the other end of the bimetal is disconnected to the power supply or a lead wire L connected to the power supply and thereby an electric power supply to the heating member 300 is cut off.

In some other embodiments, a control part 160 can control an operation of the heating member 300. A temperature of the bucket 200 sensed in the temperature sensor 212 is input to the control part 160. If a temperature of the bucket 200 is sensed to be higher than a specific temperature, the control part 160 cuts off an electric power being supplied to the heating member 300.

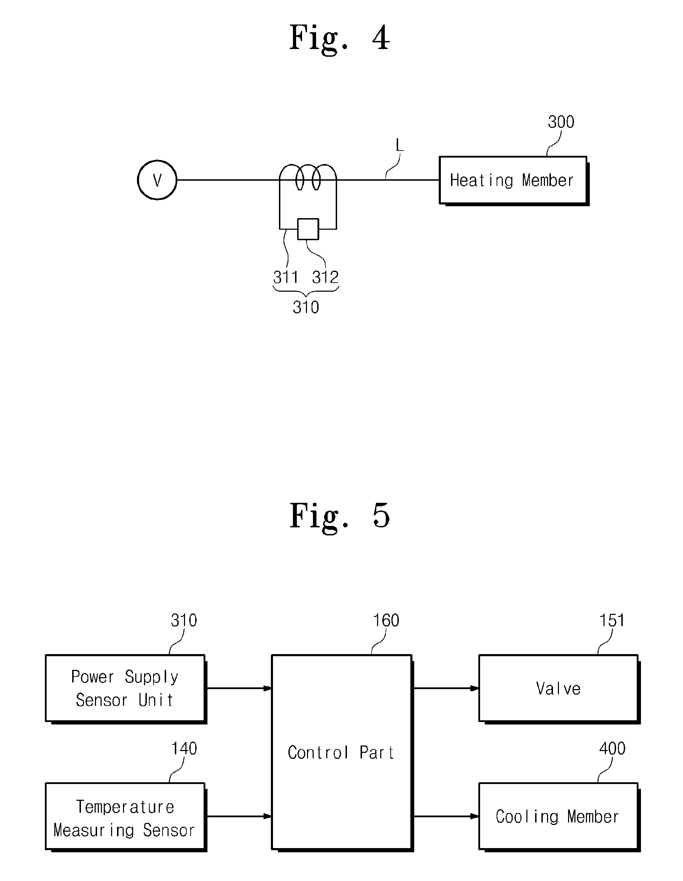

FIG. 4 is a drawing illustrating a power supply sensor unit in accordance with some embodiments of the inventive concept.

Referring to FIG. 4, a power supply sensor unit 310 is provided to the lead wire L supplying electric power to the heating member 300. The power supply sensor unit 310 senses whether a current flows through the lead wire L. The power supply sensor 310 includes a coil 311 and a current sensor 312. The coil 311 is located to be adjacent to the lead wire L. The coil 311 may be located in parallel with the lead wire L. The coil 311 may be provided to have a shape of wrapping the lead wire L so that the lead wire L passes through the center of the coil 311. The coil 311 is connected to the current sensor 312. A current flows through the lead wire L while electric power is supplied to the heating member 300. The electric power being supplied to the heating member 300 may be alternating current power being used in the home. If an alternating current flows through the lead wire L, an inducement magnetic field is generated around the lead wire L. Thus, a current by the inducement magnetic field flows through the coil 311. If electric power supply to the heating member 300 is cut off, so that a current does not flow through the lead wire L, a current is not generated in the coil 311. The current sensor 312 senses the current generated in the coil 311 to sense whether or not the heating member 300 operates.

In some other embodiments, the power supply sensor unit 310 may be directly located at the lead wire L. The power supply sensor unit 310 senses whether a current flows through the lead wire L to sense whether or not the heating member 300 operates.

The bucket 200 is connected to the flow tube 150. One end of the flow tube 150 may be connected to a lower portion of side of the bucket 200 or a bottom surface of the bucket 200. The other end of the flow tube 150 is connected to the water outlet 113 of the receipt plate 110. A valve 151 is provided to a part of the flow tube 150 being connected to the bucket 200. The valve 151 allows or blocks an inflow of heated water into the flow tube 150. Also, the valve 151 can control the amount of water that flows from the bucket 200 into the flow tube 150.

The cooling member 400 is located to be adjacent to the flow tube 150. The cooling member 400 is located between the valve 151 and the water outlet 113. The cooling member 400 can cool heated water that flows through the flow tube 150. The cooling member 400 may be provided to be a cooling fan. The cooling fan forms air flow toward the flow tube 150 to increase efficiency of heat transfer between air and the flow tube 150. The flow tube 150 may be formed to have a zigzag shape so that its contact area with air is widely formed.

FIG. 5 is a drawing illustrating a connection relation of a control part.

Referring to FIGS. 1 through 5, the control part 160 is electrically connected to the temperature measuring sensor 140, the power supply sensor unit 310, the valve 151 and the cooling member 400.

An external temperature sensed by the temperature measuring sensor 140 and whether or not the heating member 300 operates sensed by the power supply sensor unit 310 are input to the control part 160. The control part 160 controls the valve 151 and the cooling member 400 according to whether or not the heating member 300 operates. It is judged through a signal transmitted from the power supply sensor unit 310 whether or not the heating member 300 operates. If water in the bucket 200 is heated to a desired temperature, an operation of the heating member 300 is stopped. If an operation of the heating member 300 is stopped after the heating member 300 operates for a specific time, the control part 160 opens the valve 151 to operate the cooling member 400. If an operation of the heating member 300 is stopped, the control part 160 can immediately operate the cooling member 400. Also, the control part 160 can operate the cooling member 400 after the set-up time has elapsed since the valve 151 was open. The set-up time may be time it takes water which last flowed in the flow tube 150 to pass a place adjacent to the cooling member 400. The heated water flows in the flow tube 150 to flow toward the water outlet 113. The cooling member 400 cools the heated water that flows through the flow tube 150. After the set-up time elapsed, the control part 160 closes the valve 151. The set-up time is set so that all the water in the bucket 200 flow in the flow tube 150. After the set-up time elapsed, the control part 160 stops an operation of the cooling member 400. At this time, the set-up time may be time it takes water which last flowed in the flow tube 150 to pass a place adjacent to the cooling member 400.

The control part 160 can control the valve 151 or the cooling member 400 differently depending on an external temperature. In the embodiment below, the control part 160 divides the external temperature into two sections to control the valve 151 or the cooling member 400 but the inventive concept is not limited thereto. The control part 160 can control the valve 151 or the cooling mode 400 by a first mode and a second mode depending on the external temperature. The first mode may be a high cooling mode and the second mode may be a low cooling mode. The control part 160 controls the valve 151 or the cooling mode 400 by the first mode when the external temperature is sensed to be higher than the desired temperature. The control part 160 controls the valve 151 or the cooling mode 400 by the second mode when the external temperature is sensed to be lower than the desired temperature.

In the first mode, the valve 151 is controlled so that heated water slowly flows into the flow tube 150. The valve 151 may be provided to be a solenoid valve. The control part 160 can repeat current supply and cut off of current to the solenoid valve at regular intervals. The control part 160 can apply a current of a pulse wave shape to the solenoid valve. Thus, open and cut-off operations of the solenoid valve are repeated. The control part 160 may apply a small current to the solenoid valve at the second mode. The solenoid valve is open small at the second mode and thereby the amount of heated water that flows in the flow tube 150 may be reduced. At the first mode, time it takes all the water in the bucket 200 to be discharged to the water outlet 113 through the flow tube 150 increases. Thus, time it takes heated water to be cooled by the cooling member 400 increases.

The cooling member 400 controls so that water flowing through the flow tube 150 is cooled at high speed. For example, the cooling member 400 controls so that the cooling fan rotates at higher speed than that at the second mode. The amount of air which is thermally exchanged with heated water and the flow tube 150 is increased and thereby cooling efficiency increases. Thus, even when a temperature of air is high, the heated water and the flow tube 150 are thermally exchanged with air to be cooled.

At the second mode, the control part 160 controls the valve 151 so that heated water flows into the flow tube 151 at high speed. The control part 160 can apply a current that can completely open the solenoid valve to the solenoid valve. The control part 160 reduces a rotation speed of the cooling fan.

According to some embodiments of the inventive concept, even when an external temperature rises, heated water is sufficiently cooled to be discharged into the water outlet 113. Regardless of a change of external temperature, a temperature of cooled water being discharged into the water outlet 113 can be maintained in a proper range to baby food.

According to some other embodiments, the control part 160 controls only the valve 151 or the cooling member 400 at the first mode to cool the heated water.

According to some other embodiments, the control part 160 controls only the valve 151 or the cooling member 400 at the second mode to cool the heated water.

A process of making baby food of the milk powder dispenser 10 is as follows. A user places the milk bottle B on the supporting part 120 and puts water in the bucket 200 as needed. And then, a user pushes the switch 130. An operation of the heating member 300 is automatically stopped when water in the bucket 200 is heated to the desired temperature. The control part 160 controls the valve 151 and the cooling member 400 so that water in the bucket 200 is cooled while passing through the flow tube 150, and then is discharged into the water outlet 113. At this time, the control part 160 can reflect an external temperature measured in the temperature measuring sensor 140 in a control of the valve 151 or the cooling member 400. Thus, regardless of a change of external temperature, a temperature of cooled water being discharged into the water outlet 113 can be maintained in a proper range to make baby food. If water cooled to a proper temperature to make baby food is gathered in the milk bottle B, a user operates the milk powder container 500 so that milk powder as needed is discharged into the milk bottle B. After that, a user shakes the milk bottle B in which water and milk powder are mixed to make baby food.

According to some other embodiments, the temperature measuring sensor 140 may be omitted.

A user puts water in the bucket 200, and then pushes the switch 130. Only by those operations, water cooled to a proper temperature to make baby food after being heated for sterilization can be discharged into the water outlet 113.

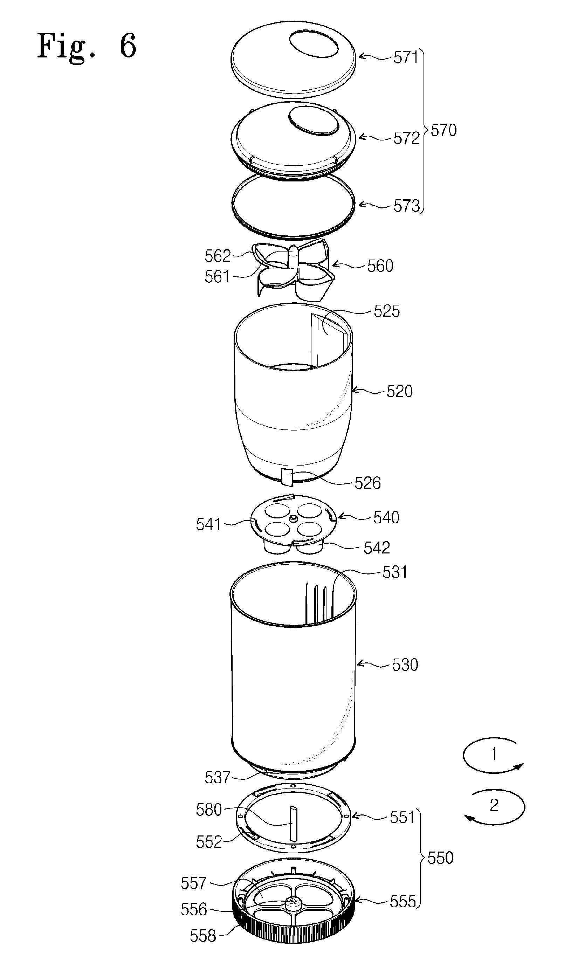

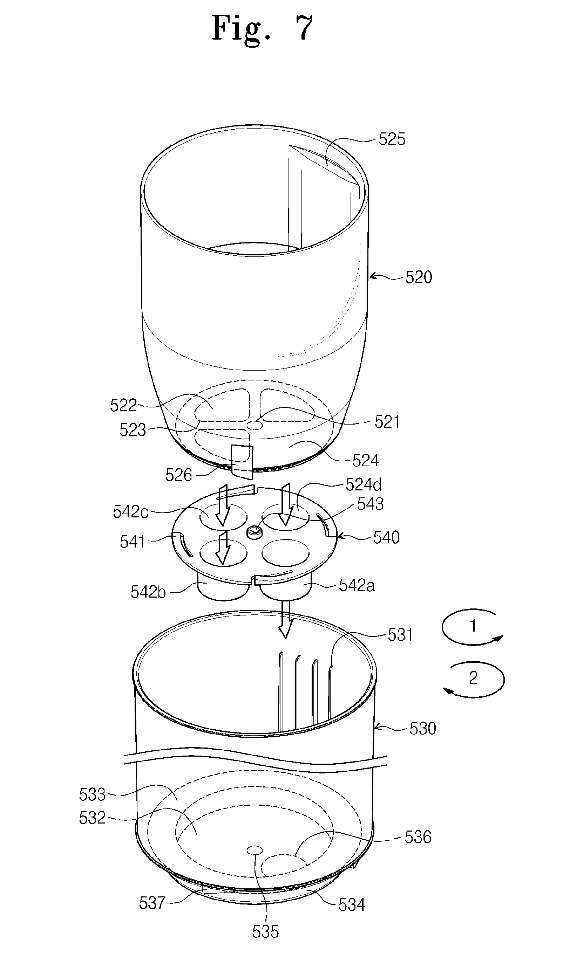

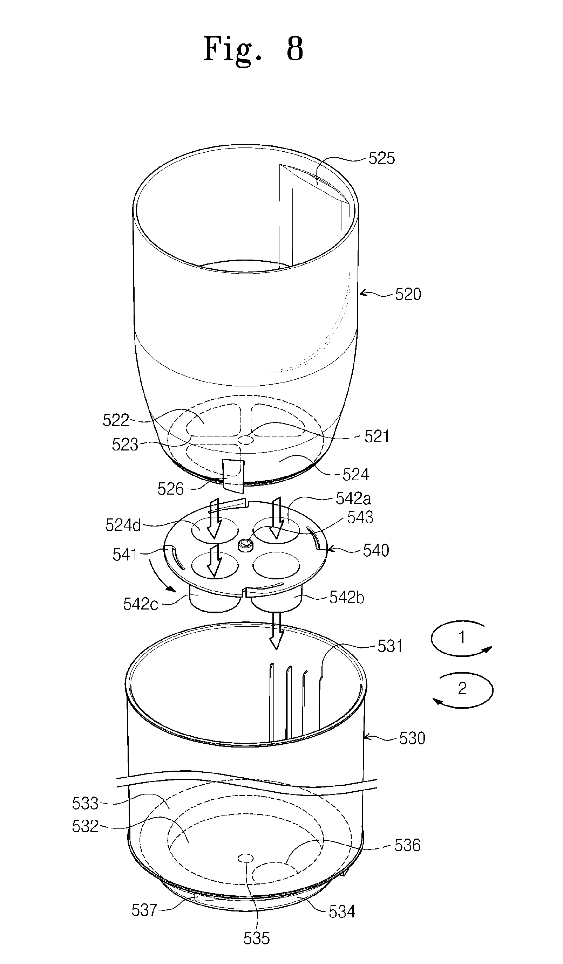

FIG. 6 is a perspective view of the disaggregated milk powder container. FIG. 7 is a drawing illustrating a process that a milk powder is discharged from a discharge quantity control part. FIG. 8 is a drawing illustrating a process that a milk powder is discharged from another discharge quantity control part.

Referring to FIGS. 6 through 8, the milk powder container 500 includes an internal container 520, an external container 530, a first rotating member 540, a second rotating member 550 and a stirring member 560.

The first rotating member 540, the second rotating member 550 and the stirring member 560 rotate in the same direction. A rotation direction of the first rotating member 540, the second rotating member 550 and the stirring member 560 is called a first direction (1) and an opposite direction of the first direction (1) is called a second direction (2).

The internal container 520 provides an interior space in which milk powder is accommodated and an upper portion of the internal container 520 is open. On a bottom surface of the internal container 520, a first outlet 522 and a covering part 524 are formed around an axis combination hole 521 of the internal container 520. The first outlet 522 may be divided into several outlets by a rib 523 provided in a radial direction.

A side wall of the internal container 520 has a circle shape and its diameter is gradually reduced to the bottom. A combination groove 525 and a first hindrance part 526 are provided on an outer circumference surface of the internal container 520. A part of the side wall of the internal container 520 gets into an interior space of the internal container 520 to form the combination groove 525. The combination groove 525 fixes the internal container 520 to the external container 530. The first hindrance part 526 is provided onto the bottom of the outer circumference surface of the internal container 520. The first hindrance part 526 has a shape of rib which is long up and down. Lengths of Both sides of the first hindrance part 526 are different from each other and thereby the bottom of the first hindrance part 526 is inclined along the first direction (1).

The first rotating member 540 includes a reverse rotation prevention rib 541 and a discharge quantity control part 542. The first rotating member 540 is provided to be a circle plate and is rotatably combined with the bottom of the internal container 520 through a first axis combination hole 543 of the center of the first rotating member 540. The reverse rotation prevention rib 541 is provided to be the plural number along a circumference direction so that it is located at the bottom of the first hindrance part 526. The reverse rotation prevention rib 541 may be provided to be 4 at regular intervals. A length direction of the reverse rotation prevention rib 541 is provided in the second direction (2). The reverse rotation prevention rib 541 has elasticity to move up and down. A top surface of an end part of the reverse rotation prevention rib 541 has becomes obliquely thick along the second direction (2). The end part of the reverse rotation prevention rib 541 may be provided to have a right triangle shape when viewed from the side. A slope of the reverse rotation prevention rib 541 is formed to correspond to a slope of the first hindrance part 526.

The discharge quantity control part 542 is provided to be the same number as the reverse rotation prevention rib 541 around the first axis combination hole 543. The discharge quantity control part 542 is provided to have a tank shape. The tank shape extends downwardly and the top and the bottom of the tank shape are open.

The external container 530 has a cylindrical shape of which the top is open. A combination rib 531 is provided up and down on an inner circumference of the external container 530. The internal container 520 is inserted into the external container 530, and then is fixed to the external container 530 so that the combination groove 525 is aligned with the combination rib 531. The bottom of the external container 530 has a step difference. A first bottom surface 532 is formed on the center of the bottom of the external container 530. A second bottom surface 533 is formed on the edge of the bottom of the external container 530. A second sidewall 534 is formed between the first and second bottom surfaces 532 and 533. An axis combination hole of the external container 530 and a second outlet 636 are formed on the first bottom surface 532. A second hindrance part 537 protruding downwardly from an external surface of the second surface 533 is formed on the second surface 533. The second hindrance part 537 is provided to be the same number as the discharge quantity control part 542 along a circumference direction. The second hindrance part 537 has a triangle shape when viewed from the side and slopes of both sides of the triangle are differently formed. The second hindrance part 537 may be formed to have a right triangle shape. At this time, a part of small slope is provided to have a ascending slope along the first direction (1).

The second rotating member 550 includes a rotation control member 551 and a gripping member 555. The second rotating member 550 is located below the external container 530. The second rotating member 550 is combined with the first rotating member 540 through a rotation axis 580 and rotates together with the first rotating member 540.

The rotation control member 551 is provided to have a circle ring shape and is located at a step difference formed at the bottom of the external container 530. In the rotation control member 551, a rotation control rib 552 is formed along a circumference direction so that it is located below the second hindrance part 537. The rotation control rib 552 is provided to be the same number as the discharge quantity control part 542 in a length direction of the rotation control rib 552. The length direction of the rotation control rib 552 is the first direction (1). The rotation control rib 552 has elasticity and can move upwardly and downwardly. Both sides of a top surface of an end part of the rotation control rib 552 is obliquely protruded to have a triangle shape when viewed from the side. At this time, an ascending slope along the first direction (1) is formed to be smaller than a descending slope along the second direction (2).

The gripping member 555 is provided to have a cylindrical shape of which the top is open. The rotation control member 551 is inserted into the inside of the gripping member 555 to be combined with the gripping member 555. A rotation axis fixed part 556 is provided to the center of the gripping member 555 and a lower outlet 557 is formed around the rotation axis fixed part 556. The lower outlet 557 is provided to be the same number as the discharge quantity control part 542. If the first rotating member 540 and the second rotating member 550 are combined with each other by the rotation axis 580, the discharge quantity control part 542 and the lower outlet 557 are aligned with each other.

The gripping groove 558 is formed in an outer circumference surface of the gripping member 555. The gripping groove 558 is formed to be long up and down to prevent a user's hand from slipping when the user holds and rotates the gripping member 555.

The stirring member 560 is provided to an interior space of the internal container 520. The stirring member 560 includes an axis insertion part 561 and a stirring part 562. The top of the rotation axis 580 combined with the first rotating member 540 and the second rotating member 550 is inserted into the axis insertion part 561. Thus, the stirring member 560 rotates together with the first rotating member 540 and the second rotating member 550. The stirring part 562 is formed to extend in a radius direction from an outer circumference surface of the axis insertion part 561.

Upper portions of the internal container 520 and the external container 530 are covered by a covering member 570. The covering member 570 includes a top cover 571 and a bottom cover 572 and covers the interior space doubly. A sealing member 573 may provided to the bottom cover 572.

In some other embodiments, the first hindrance part 526 is formed on the outer container 530 and the reverse rotation prevention rib 541 is formed on the second rotating member 550. The second hindrance part 537 is formed on the internal container 520 and the rotation control rib 552 is formed on the first rotating member 540. That is, a part protruding downwardly from the bottom surface of the external container 530 is downwardly inclined in the first direction (1). A rib provided to the bottom of outer circumference surface of the internal container 520 has its bottom of triangle shape of which slopes of both sides are different. One side having a small slope has an ascending slope along the first direction (1).

A process that a milk powder flows in and is discharged from the discharge quantity control part is described below.

If the first rotating member 540 and the second rotating member 550 rotate one time, one discharge quantity control part (e.g., 542a) is located at a lower portion of the covering part 524 and at an upper portion of the second outlet 536. Thus, a milk powder accommodated in one discharge quantity control part 542a is discharged through the second outlet 536 and the lower outlet 557. The rest of the discharge quantity control parts (e.g., 542b, 542c and 542d) are located at a lower portion of the first outlet 522. Thus, a milk powder flows in each of the discharge quantity control parts 542b, 542c and 542d.

If the first rotating member 540 and the second rotating member 550 rotate again, another discharge quantity control part 542b is located at an upper portion of the second outlet 536 and a milk powder accommodated in the discharge quantity control part 542b is discharged. A milk powder flows in the rest of the discharge quantity control parts (e.g., 542a, 542c and 542d).

According to some embodiments of the inventive concept, a rotation in the second direction (2) of the first and second rotating members 540 and 550 is prevented. An angle that the first and second rotating members 540 and 550 rotate in the first direction (1) is always uniformly controlled. Thus, a user can discharge a milk powder in the milk bottle (B) by unit of accommodation quantity. While a milk powder is stirred by the stirring member 562, it flows in the discharge quantity control part 524 over several times. Thus, a fixed quantity of milk powder is always discharged through the discharge quantity control part 542 without being agglomerated state.

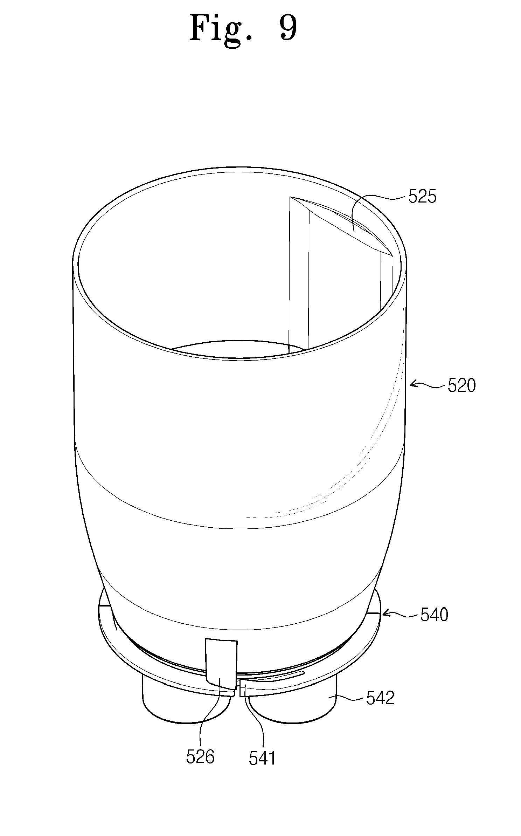

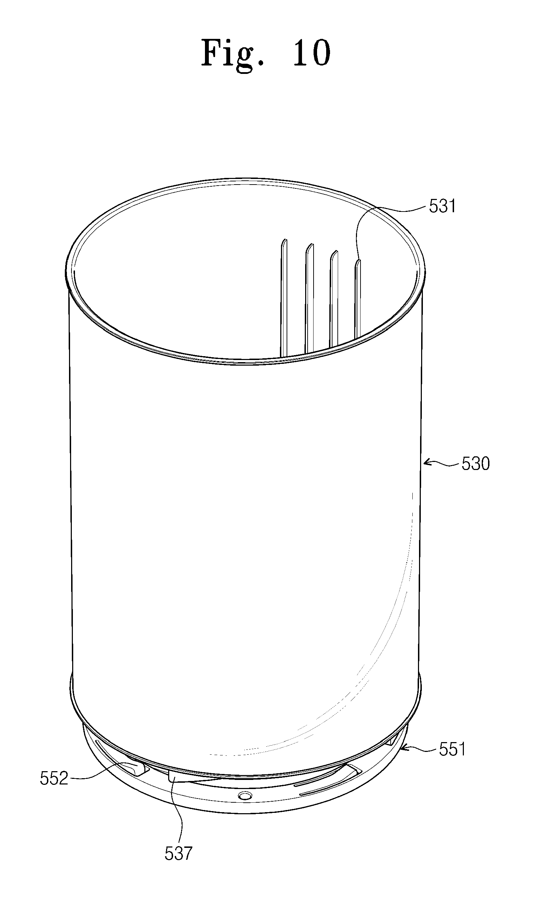

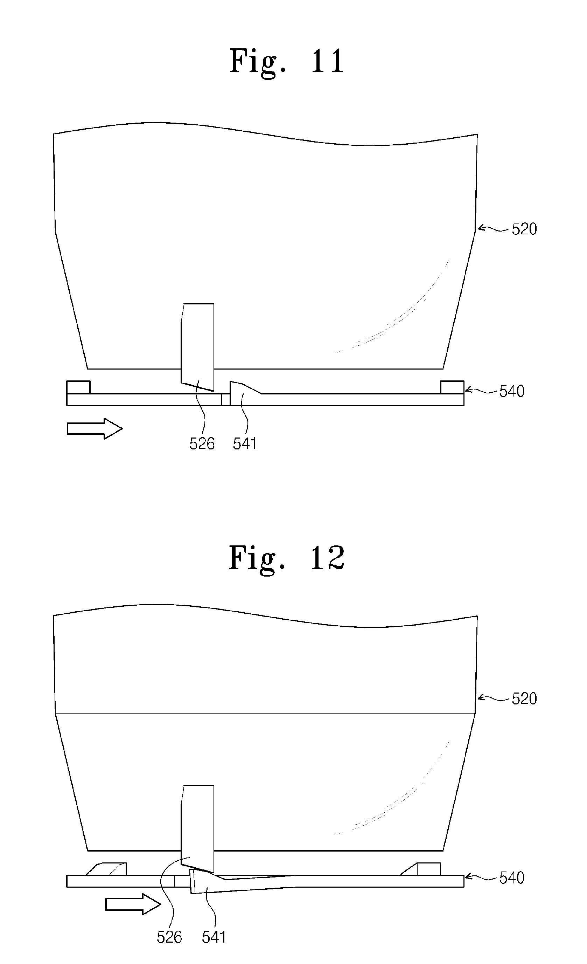

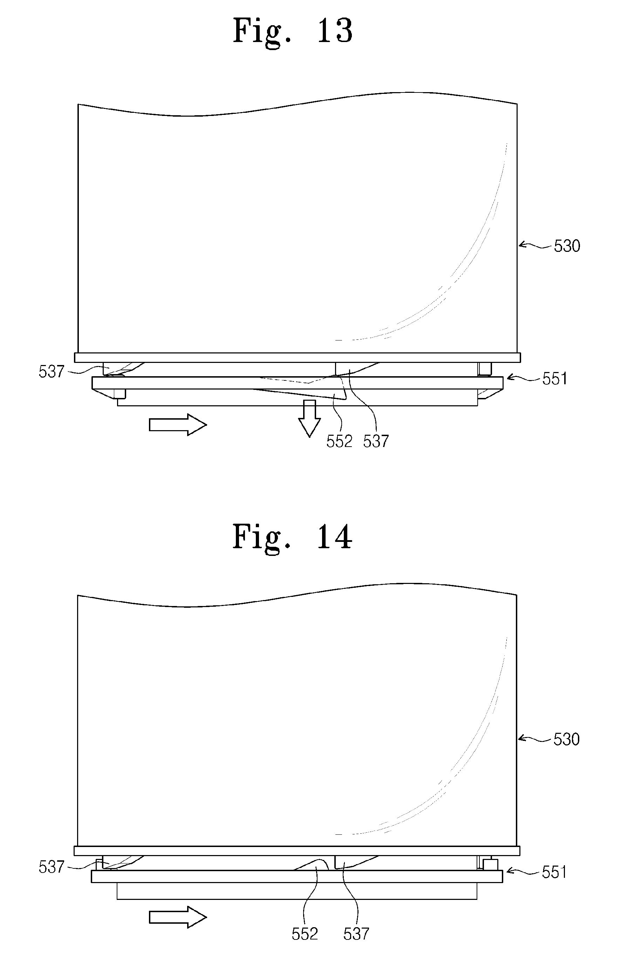

FIG. 9 is a perspective view illustrating a state that an internal container is combined with a first rotating member. FIG. 10 is a perspective view illustrating a state that an external container is combined with a first rotating member. FIG. 11 is a drawing illustrating a first rotating member in which a rotation begins. FIG. 12 is a drawing illustrating a first rotating member in which a rotation is over. FIG. 13 is a drawing illustrating a rotating control member in which a rotation begins. FIG. 14 is a drawing illustrating a rotating control member in which a rotation is over.

A process that the first rotating member 540 and the second rotating member 550 rotate is described with reference to FIGS. 9 through 14.

If a user holds the gripping member 555 to apply a force to the gripping member 555 in a rotation direction, the first and second rotating members 540 and 550 rotate together. If a rotation begins, the rotation control rib 552 is bent downwardly by the second hindrance part 537. At this time, a user can recognize that a rotation begins by a force applying in the second direction (2). The reverse rotation prevention rib 541 moves away from the first hindrance part 526.

If a rotation proceeds, the rotation control rib 552 goes back to the original position and a force applying in the second direction (2). Thus, a user can softly rotate the first and second rotating members 540 and 550.

If a rotation further proceeds, the reverse rotation prevention rib 541 is bent downwardly by the first hindrance part 526. A user can recognize that a rotation is drawing to an end by a force applying in the second direction (2). If a rotation is completed, the reverse rotation prevention rib 541 rapidly goes back the original position. At this time, a user can recognize that a rotation is completed by a small vibration or a sound.

A user may hold the gripping member 555 to apply a force in the second direction (2). At this time, the reverse rotation prevention rib 541 contacts with the side of the first hindrance part 526. Thus, a great force applies in the first direction (1) and thereby a user can recognize that a rotation is performed in a wrong direction.

According to some embodiments of the inventive concept, baby food can be simply made. According to some embodiments of the inventive concept, a temperature of water being discharged can be maintained within a specific range even though a temperature varies.

The above-disclosed subject matter is to be considered illustrative, and not restrictive, and the appended claims are intended to cover all such modifications, enhancements, and other embodiments, which fall within the true spirit and scope of the inventive concept. Thus, to the maximum extent allowed by law, the scope of the inventive concept is to be determined by the broadest permissible interpretation of the following claims and their equivalents, and shall not be restricted or limited by the foregoing detailed description.

## Claims

1. A milk powder dispenser comprising:
a housing;
a milk powder container that can be detached from the housing;
a water bucket located at an interior space of the housing and provided to one surface of the housing; and
a heating member of which an operation is automatically stopped after heating water in the water bucket to a specific temperature, the heating member being located at the interior space of the housing so that it is adjacent to the water bucket.

2. The milk powder dispenser of claim 1, wherein a receipt plate on which the milk powder container is located is formed on the side of the housing and wherein a milk powder inlet into which a milk powder discharged from the milk powder container is formed on a top surface of the receipt plate and a milk powder outlet connected to the milk powder inlet is formed on a bottom surface of the receipt plate.

3. The milk powder dispenser of claim 1 or 2, further comprising:
a water flow tube connecting the water bucket and a water outlet formed on an external surface of the housing; and
a cooling member located at an interior space of the housing so that it is adjacent to the water flow tube,
wherein a valve is provided to a part at which the water bucket and the flow tube are connected to each other.

4. The milk powder dispenser of claim 3, further comprising a control part controlling the valve and the cooling member.

5. The milk powder dispenser of claim 4, wherein if water in the water bucket is heated to a desired temperature, the control part operates the cooling member to cool water flowing through the flow tube while making the heated water flow into the flow tube by opening the valve.

6. The milk powder dispenser of claim 5, further comprising a power supply sensor unit sensing whether a current flows through a lead wire applying power to the heating member, the power supply sensor unit being connected to the control part,
wherein the control part operates the valve and the cooling member if it senses that a current flowing through the lead wire is cut off.

7. The milk powder dispenser of claim 5, further comprising a temperature measuring sensor providing a sensed external temperature to the control part, the temperature measuring sensor being attached to the housing,
wherein the control part differentially controls the valve according to the external temperature to control the quantity of water flowing in the flow tube.

8. The milk powder dispenser of claim 5, further comprising a temperature measuring sensor providing a sensed external temperature to the control part, the temperature measuring sensor being attached to the housing,
wherein the control part differentially controls the cooling member according to the external temperature

9. The milk powder dispenser of claim 1 or 2, wherein the milk powder container comprises:
an internal container forming a space accommodating the milk powder and on a bottom surface of which a first outlet and a covering part are formed;
an external container wrapping the internal container and on a bottom surface of which a second outlet is formed;
a first rotating member which rotates in a first direction between the external container and a lower portion of the internal container, the first rotating member including a discharge quantity control part; and
a second rotating member being combined with the first rotating member by a rotation axis to rotate together with the first rotating member.

10. The milk powder dispenser of claim 9, wherein the discharge quantity control part has a shape of tank extending downwardly and the top and the bottom of which are open.
